Europäisches Patentamt

(19) European Patent Office

Office européen des brevets

(11) Publication number: **0 298 095**
**B1**

(12) **EUROPEAN PATENT SPECIFICATION**

(45) Date of publication of patent specification: 16.08.90

(51) Int. Cl.⁵: **F 16 F 7/10, F 16 F 15/00**

(21) Application number: 88900239.0

(22) Date of filing: 14.12.87

(86) International application number:
PCT/GB87/00902

(87) International publication number:
WO 88/05506 28.07.88 Gazette 88/17

(54) **ACTIVE CONTROL OF VIBRATION.**

(30) Priority: 16.01.87 GB 8700908

(43) Date of publication of application:
11.01.89 Bulletin 89/02

(45) Publication of the grant of the patent:
16.08.90 Bulletin 90/33

(84) Designated Contracting States:
DE FR GB IT NL

(56) References cited:
EP-A- 163 949
EP-A- 195 850
FR-A- 1 547 529
US-A-4 498 038
US-A-4 610 420
US-A-4 643 385

Patent Abstracts of Japan, volum 10, no. 21
(M-449)(2078), 28 January 1986, JP-A-60179543
Patent Abstracts of Japan, volum 10, no. 10
(M-446)(2067), 16 January 1986, JP-A-60172742

(73) Proprietor: TOPEXPRESS LIMITED
13/14 Round Church Street
Cambridge CB5 8AD (GB)

(72) Inventor: ROSS, Colin
46 Church Street Fen Ditton
Cambridge CB5 8SU (GB)
Inventor: SCOTT, Julian, Francis
5 York Terrace
Cambridge CB1 2PR (GB)
Inventor: SUTCLIFFE, Sean, George, Cronin
235 Mill Road
Cambridge CB1 3BE (GB)

(74) Representative: Nash, Keith Wilfrid et al
KEITH W. NASH & Co. Pearl Assurance House
90-92 Regent Street
Cambridge CB2 1DP (GB)

## Description

### Field of the invention

The present invention relates to the active control of vibration.

### Background to the invention

When a vibrating body is mounted on a support body, it is often desired to control or minimise the transmission of vibration from the vibrating body to the support body. It is known to reduce the transmission of vibration passively by providing vibration isolators of various forms between the two bodies. It is also known to reduce vibration actively, often in conjunction with the use of passive isolators. In the active control of vibration, sensors are attached to a body to measure its movements and these measurements are used to generate control signals for one or more devices for applying cancelling forces or movements to the body. It is known to provide this active control system on the vibrating body itself or on the supporting body.

In theory, the active control of vibration can be absolutely effective and reduce all vibrations to zero. However, this would require the provision of exactly the correct cancelling forces at exactly the correct timing. In practice, this is difficult if not impossible to achieve. Normally, both the vibrating body and the support will have a complex distribution of mass and rigidity and the vibrations to be cancelled will also be relatively complex. Accordingly, the calculation of the correct pattern of forces to be applied is complicated. Additionally, the calculation takes a certain amount of time. Accordingly, the cancelling forces actually applied will be only an approximation to the exact cancelling forces required and the timing of application of the forces may not be correct. Any attempt to increase the accuracy of the calculation will increase the time taken and any attempt to decrease the time taken will decrease the accuracy.

The problems are compounded in the common situation in which a vibrating body is mounted at several separate points on a supporting body. Active cancellation must be applied at each mount, thus each mount will tend to have several vibration sensors and several actuators to apply cancelling forces in different directions. If there are N mounts, each having M actuators and K sensors, then the control system must attempt to minimise the vibrations detected at KN sensors by the operation of MN actuators. However, since all the sensors and all the actuators are mounted on the same body (the vibrating body or the support body), the forces applied by each actuator will have an effect on the movements detected by each sensor, through the common body. Thus the control system must operate on an MN×KN matrix of interactions between acuators and sensors. Following calculation of this matrix, the control system must calculate MN control signals for the forces to be applied by each individual actuator in order to cancel the vibrations.

In the passive control of vibration, isolating arrangements are well known which includes an intermediate body between the vibrating body and the support body . Such isolating arrangements comprise compound mounts designed so that the secondary mounting resonance is below the frequency at which vibration isolation is required. This means that, for effective vibration isolation at low frequencies, the intermediate body must be of relatively large mass. A few examples of known isolating arrangements employing an intermediate body are now referred to.

A method of active vibration control is known from U.S. patent No. 4610420 wherein coupling between a motor and a support is established through an intermediate body which effectively given a mass adjustable in dependence on engine speed, thereby to alter the vibration-transmitting characteristics of the intermediate body.

In Japanese Publication No. 60-179543, a supplementary mass is attached or detached from the intermediate body responsively to the sensed speed of a driving motor, thereby again to control the vibration-transmitting characteristics of the intermediate body. Japanese publication No. 59-26129 discloses a generally similar arrangement wherein the vibrations of the motor are sensed.

Finally, European Patent Application No. A-163949 discloses a method of active vibration control in which coupling via an intermediate body is controlled responsively to signals provided by velocity sensor sensing vibrational speeds of the load.

### Summary of the invention

The present invention provides a method of active vibration control in which, in order to control vibrations over at least a part of the frequency range for which control is required, controlling forces are applied to an intermediate body (5) which is weakly vibrationally coupled to both a vibrating body (1 or 3) and a supporting body (3 or 1), *characterised in that*: the controlling forces are applied to the intermediate body (5) responsively to detected vibrations of said intermediate body (5).

The present invention also provides a mounting for carrying out the above described method, in which the subject vibrating body is mounted on a supporting body by a mount which includes an intermediate body between the vibrating body and the supporting body wherein the intermediate body weakly vibrationally coupled to both of said subject and mounting bodies, and in which means is provided for applying compensating forces to the intermediate body responsively to detected vibrations of said intermediate body, so as to control or minimize the vibrations of the intermediate body, at least over a part of the frequency range for which control of vibrations is required.

In the following description, where reference is made to cancellation of vibrations in the intermediate body, this refers to the part of the frequency range over which vibration control is required if active control is not provided over the entire range. Generally, when active control is provided for part of the frequency range only, this active control will provide low frequency isolation.

If vibrations in the intermediate body can be cancelled, it will not transmit any vibrations to the supporting body, and thus the arrangement will minimise the transmission of vibrations to the supporting body. Since the intermediate body is only weakly vibrationally coupled to both the vibrating body and the supporting body, it may not be necessary to take the pattern of rigidity and mass distribution in either the vibrating body or the supporting body into account when calculating the controlling forces to be applied to the intermediate body. Since, in the case of active vibration control over the entire range of interest the intermediate body is provided simply in order to have its vibrations cancelled, its pattern of rigidity and mass distribution may be selected to reduce the complexity of the calculations necessary. When active control is provided only for low vibration frequencies, the intermediate body may be required to provide mass for passive control at higher frequencies only, the intermediate body can be of smaller mass than would otherwise be the case.

In the case referred to above where the vibrating body is mounted on the supporting body in a number of places, each mount may have only a weakly vibrationally coupled intermediate body and because they are only weakly vibrationally coupled intermediate body and because they are only weakly vibrationally coupled the cross-interactions are small and so they may each be considered in isolation from each other without much error. Accordingly, instead of one matrix of interaction of size MN×KN, there are N individual matrices, one for each mount, each of size M×K. Thus the total amount of calculation required to generate estimates of the interaction matrices is reduced, and additionally a separate controller may be provided for each mount so that calculation of the N separate matrices may occur in parallel. Each of these factors has an N-fold reduction in the amount of calculation required, so that the amount of time taken to estimate the interaction matrices may be reduced by a factor of $N^2$. The subsequent calculation of control signals required for the actuators will still involve MN actuators, but the control signals for each separate group of M actuators at each mount may be calculated independently and in parallel, so that there is an N-fold reduction in calculation time at this step.

Since the intermediate body is only weakly vibrationally coupled to the other bodies, a further advantage of this arrangement is that the characteristics of the vibrating body and the supporting body will have little effect upon the calculations, that a system can be optimised ignoring their effect, and so once the characteristic calculations required for a mount have been determined it may be used to mount any vibrating body on any supporting body without the need for any alterations in its control system and will operate fairly well in most environments. Even when active control is only employed for low frequency vibrations, a less complex control system will usually be possible.

Again since there is only weak vibrational coupling another important benefit is that the calculation of the control signals at each mount is independent of the presence of the other mounts. Accordingly, increasing the number of mounts for a vibrating body does not increase the time required to calculate the control signals for the actuators, assuming that each mount is provided with an individual control system which operates independently and in parallel to all the others.

In some circumstances, it may be advantageous to provide the mounting with a passive damper, or to use a resilient element with high damping, to reduce oscillations within the mounting which might otherwise be perpetuated by the resilience of the coupling between the intermediate member and the vibrating and supporting bodies.

It may also be desirable to have more than one mount connecting the intermediate body to the vibrating or support body.

In another embodiment of the invention the support body is vibrating and the body being supported is to be isolated i.e. kept free from vibration.

If the intermediate body were rigid then because it has only six degrees of freedom itself it would be necessary to provide at least six vibration sensors in order to describe its vibration completely. If the intermediate body was sufficiently large compared with the structural wavelengths or if significant bending moments were applied to the body so that it no longer remained rigid, then a minimum of six vibration sensors will be required to describe its vibration. All of the vibration sensors which give significant information about the intermediate body's movement would be used by the control system.

In addition, if the body remains substantially rigid then six forces will be sufficient to provide the control necessary to control the vibration of the body provided that they are able independently to drive the six degrees of freedom of the body. If the body is not substantially rigid then more forces and thus actuators may be necessary. For a through cancellation for forces within the intermediate body, the compensating forces should be applied along the same lines as those corresponding to the effective forces applied to the intermediate body by the vibrating body and in the opposite direction. However, it is desirable to minimise the number of actuators required to control the intermediate body's vibration and in a preferred embodiment of the invention the mounting is such that all forces applied to the intermediate body by the vibrating body can be reduced mechanically to forces applied along three orthogonal directions. In this case a reduced number of actuators will be required, three being sufficient to provide a general compensating force.

In some systems the forces from the vibrating body acting upon the intermediate body tend to be confined to a single plane, in which case the actuators of the active vibration reduction system may only be required to generate forces in the two dimensions within the plane and rotational movement about an axis normal to the plane.

Since the static requirement for mounts is generally to provide a force in one direction to support the body it is required to be relatively stiff in that direction. However, it will transmit vibration in all axes in which it is stiff and thus it is advantageous to reduce the stiffness of the passive mount components in the other axes or at least to reduce the stiffness of the decoupling means on the vibrating body side of the intermediate body. The mount would then only transmit vibrational forces in one direction and only one actuator and sensor would be required.

Furthermore this single actuator need not apply forces to a body at all; the actuator could be the body itself and it would change its dimension in the direction of the mounting axis to reduce the transmission of vibration. But it must be noted that it should be only weakly vibrationally coupled to the vibrating and support bodies.

Normally, the vibration sensors will be accelerometers and the actuators will be inertial shakers mounted on the intermediate body.

An embodiment of the present invention, given by way of non-limitative example, will now be described with reference to the accompanying drawings, in which:

Figure 1 is a side view of a mounting embodying the present invention, largely in section; and

Figure 2 is a diagram of a mechanical equivalent system to the mounting of Figure 1.

Detailed description of the drawings

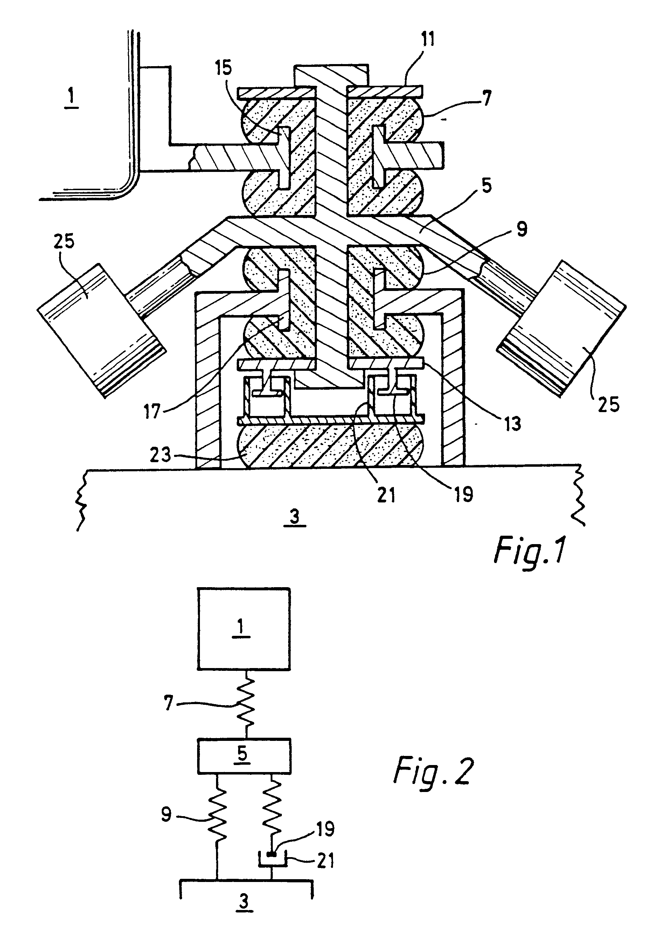

Figure 1 shows a mounting by which a vibrating body 1 is mounted on a supporting body 3. The mounting includes an intermediate body 5 and two elastomeric members 7, 9 one each above and below it. The elastomeric members are held in place by washers 11, 13 which are themselves trapped by flanges of the intermediate body 5.

The vibrating body 1 is supported on the mounting by an attachment ring 15 which is positioned within the upper elastomeric body 7 and extending around but spaced from the intermediate body 5. The supporting body is joined to the mounting by a similar attachment ring 17, which also passes around the intermediate body and is positioned within the lower elastomeric body 9.

The weight of the vibrating body 1 is transmitted through the upper elastomeric member 7, a central portion of the intermediate body 5, and the lower elastomeric member 9 to the supporting body 3. The elastomeric members 7, 9 will also tend to transmit vibration between the bodies, but their resilience means that vibrational movement of the intermediate body and forces within it are only weakly coupled to the vibrating body 1 and the supporting body 3.

Because the only supports for the intermediate body 5 are resilient, it may tend to oscillate. In order to damp such oscillations, the lower washer 13 bears damper plates 19 which are positioned within dashpots 21 mounted through a further elastomeric member 23 on the supporting 3. This arrangement damps vertical oscillations of the lower washer 13, and through it the intermediate body 5, in a manner known *per se*.

Figure 2 shows the mechanical equivalent of the system illustrated in Figure 1, in terms of masses, springs and a damper. Corresponding parts are given the same reference numerals as in Figure 1.

The vibrations of the vibrating body 1 cause forces to be transmitted through the upper elastomeric decoupling member 7 to the intermediate body 5, which tends to be vibrated. In order to minimise or control the vibration in the intermediate body 5, it is equipped with a system for the active control of vibration. It will be appreciated that if vibration is eliminated in the intermediate body 5, it will not transmit vibration through the lower elastomeric decoupling member 9 to the support body 3.

The active vibration control system includes a number of accelerometers (not shown) mounted on the intermediate body 5 to measure its translational and rotational movement in various directions and about various axes, a plurality of shakers 25 likewise mounted on the intermediate body 5 and operable to transmit forces to it, each along a particular line or about a particular axis, and a control means (not shown). Such control systems are known *per se*, but have hitherto only been mounted on vibrating bodies and support bodies rather than on intermediate bodies. The control means receives signals from the accelerometers, and in turn derives control signals for the shakers 25, so as to control the operation of the shakers 25 in such a manner as to counteract the vibrating forces received from the vibrating body 1 and render the intermediate body 5 motionless. Thus the control means is in effect a negative feedback system operating to maintain the outputs of the accelerometers as nearly as possible at zero detected acceleration.

Because the contact between the vibrating body 1 and the mounting is solely by means of the attachment ring 15 and a circular flange around it, the contact is symmetrical. Accordingly, it is possible to treat all the forces applied by the vibrating body 1 to the intermediate body 5 as being applied at the point at the centre of the attachment ring 15. Each shaker 25 is arranged to provide a force along a line or about an axis which also passes through this same spot. This can be seen clearly in respect of the two inertial shakers illustrated in Figure 1.

In this manner, the vibrating forces from the vibrating body 1 and the compensating forces from the shakers 25 can be considered to be applied to the intermediate body 5 at the same point. This avoids any turning moments being generated within the intermediate body 5 by lateral offsets between opposing forces.

The inertial shakers 25 are arranged symmetrically around the intermediate body 5, and are preferably spaced by 90° or 120°. This provides a simple and symmetrical distribution of masses and of compensating forces within the intermediate body 5.

Because the intermediate body 5 is only weakly coupled to the vibrating body 1 and the supporting body 3, and is designed to have a simple shape, the calculations required to derive the necessary control signals for the shakers 25 are greatly simplified as compared with the known arrangements of mounting an active vibration control system on either a vibrating body or a supporting body, in which case the characteristics of that body must be taken into consideration. In the example above-described, it is assumed that active control of the intermediate body is prevailed over the entire frequency range of vibrations for which isolation is required. In a modification, active control is used to control low frequency vibrations of the intermediate body, which in conjunction with other parts of the mounting through which the vibrating body is connected to the supporting body, is designed to achieve passive control of higher frequency vibrations in a substantially conventional manner. Six accelerometers will generally be required for the active vibration control system, but the intermediate body can be of smaller mass than in mountings relaying solely on passive control.

**Claims**

1. A method of active vibration control in which, in order to control vibrations over at least a part of the frequency range for which control is required, controlling forces are applied to an intermediate body (5) which is weakly vibrationally coupled to both a vibrating body (1 or 3) and a supporting body (3 or 1), *characterised in that*: the controlling forces are applied to the intermediate body (5) responsively to detected vibrations of said intermediate body (5).

2. A method according to claim 1 wherein the vibrating body (1 or 3) is mounted on the supporting body (3 or 1) at a number of mounting points, and each acts according to claims 1.

3. A method according to claim 2, wherein a separate active vibration means (25) for controlling vibrations is provided for each mount.

4. A method according to claim 3, wherein each mount has M force producing means (25), and the control signals for the separate group of M force producing means at each mount calculated independently.

5. A method according to any of claims 1 to 4, wherein the intermediate body mounting includes a damper (19, 21) in order to reduce oscillations within the mounting which might otherwise be perpetuated by the resilience of the decoupling (7, 9) between the intermediate body (5) and the vibrating and supporting bodies (1 and 3).

6. A method according to any of claims 1 to 5, having more that one resilient element (7,9) connecting the intermediate body (5) to the vibrating and supporting bodies (1 and 3).

7. A method according to claim 6 in which the intermediate body (5) is rigid.

8. A method according to claim 7 in which the intermediate body (5) possesses $n$ degrees of freedom and up to $n$ forces are supplied to the body to completely control the vibrations.

9. A method according to claim 8, wherein the mounting is such that all forces applied to the intermediate body (5) by the vibrating body (1 or 3) are reduced mechanically to three forces applied along three orthogonal directions, and three force producing means (25) are provided to produce a general controlling force.

10. A method according to any of claims 1 to 9, wherein the forces from the vibrating (1 or 3) acting upon the intermediate body (5) are substantially confined to a single plane, and actuators consisting of two force producing means (25) generate forces in the two orthogonal directions within the plane and rotational movement about an axis normal to the plane.

11. A method according to any of claims 1 to 10, wherein the mount is relatively stiff in one direction and thus provides a supporting force substantially in that direction, whilst having lesser stiffness of passive mount components in the other perpendicular directions, or at least reduced stiffness of the decoupling means on the vibrating body side of the intermediate body, and the vibration controlling means comprises only one actuator (25).

12. A method according to claim 11, wherein part of the single actuator (25) constitutes the intermediate body (5).

13. A method according to any claims 1 to 12, wherein the vibration sensing means comprises one or more accelerometers.

14. A method according to any of claims 1 to 13, wherein the force producing means (25) comprises one or more inertial shakers.

15. A method according to any of claims 1 to 14, wherein active control means (25) operates to control vibrations and passive control means operates for higher vibration frequencies.

16. A mounting for carrying out the method of claims 1 to 15 in which the subject vibrating body (1 or 3) is mounted on a supporting body (3 or 1) by a mount which includes an intermediate body (5) between the vibrating body and the supporting body wherein the intermediate body is weakly vibrationally coupled to both of said subject and mounting bodies, characterised in that means (25) is provided for applying compensating forces to the intermediate body responsively to detected vibrations of said intermediate body, so as to control or minimize the vibrations of the intermediate body, at least over a part of the frequency range for which control of vibrations is required.

**Patentansprüche**

1. Ein Verfahren zur aktiven Schwingungssteuerung, bei dem zum Steuern der Schwingungen über mindestens einem Teil des Frequenzbereiches, für den eine Steuerung verlangt wird, Steuerkräfte einem Zwischenkörper (5), der schwingungsmäßig schwach sowohl mit einem Schwingungskörper (1 oder 3) wie auch mit einem Stützkörper (3 oder 1) gekoppelt ist, zugeführt werden, *dadurch gekennzeichnet, daß* die Steuerkräfte dem Zwischenkörper (5) nach Maßgabe von erfaßten Schwingungen des Zwischenkörpers (5) zugeführt werden.

2. Ein Verfahren nach Anspruch 1, wobei der Schwingungskörper (1 oder 3) auf dem Stützkörper (3 oder 1) an einer Zahl von Befestigungspunkten befestigt ist und jeder nach Anspruch 1 wirkt.

3. Ein Verfahren nach Anspruch 2, wobei ein getrenntes aktives Schwingungsmittel (25) zum Steuern der Schwingungen für jede Befestigung vorgesehen ist.

4. Ein Verfahren nach Anspruch 3, wobei jede Befestigung M eine Kraft erzeugende Mittel (25) aufweist und die Steuersignale für die getrennte Gruppe der M eine Kraft erzeugende Mittel an jeder Befestigung unabhängig errechnet wird.

5. Ein Verfahren nach irgendeinem der Ansprüche 1 bis 4, wobei dei Zwischenkörperbefestigung zum Herabsetzen der Schwingungen innerhalb der Befestigung, die sonst durch die Elastizität der Entkopplung (7, 9) zwischen dem Zwichenkörper (5) und dem Schwingungskörper und dem Stützkörper (1 und 3) bestehen bleiben könnten, einen Dämpfer (19, 21) enthält.

6. Ein Verfahren nach irgendeinem der Ansprüche 1 bis 5 mit mehr als einem den Zwischenkörper (5) mit dem Schwingungskörper und dem Stützkörper (1 und 3) verbindendem elastischen Element (7, 9).

7. Ein Verfahren nach iregendeinem Anspruch 6, bei dem der Zwischenkörper (5) steif ist.

8. Ein Verfahren nach Anspruch 7, bei dem der Zwischenkörper (5) *n* Freiheitsgrade besitzt und dem Körper zur vollständigen Steuerung der Schwingungen bis zu *n* Kräfte zugeführt werden.

9. Ein Verfahren nach Anspruch 8, wobei die Befestigung derart ist, daß sämtliche dem Zwischenkörper (5) durch den Schwingungskörper (1 oder 3) zugeführten Kräfte mechanisch auf drei entlang von drei orthogonalen Richtungen zugeführten Kräften herabgesetzt werden und drei die Kräfte erzeugende Mittel (25) zum Erzeugen einer allgemeinen Steuerkraft vorgesehen sind.

10. Ein Verfahren nach irgendeinem der Ansprüche 1 bis 9, wobei die auf den Zwischenkörper (5) von dem schwingendem (1 oder 3) einwirkenden Kräfte im wesentlichen auf ein Ebene begrenzt sind, und aus zwei krafterzeugenden Mitteln (25) bestehende Betätiger in dem beiden orthogonalen Richtungen Kräfte innerhalb der Ebene und eine Drehbewegung um eine zu der Ebene unter 90 Grad verlaufenden Achse erzeugen.

11. Ein Verfahren nach irgendeinem der Ansprüche 1 bis 10, wobei die Befestigung in einer Richtung verhältnismäßig steif ist und damit im wesentlichen in dieser Richtung eine Stützkraft liefert, während sie in anderen dazu unter 90 Grad verlaufenden Richtungen eine geringere Steifheit passiver Befestigungskomponenten aufweist oder mindestens eine herabgesetzte Steifigkeit der Entkopplungsmittel auf der Schwingungskörperseite des Zwischenkörpers und das die Schwingung steuernde Mittel nur einen Betätiger (25) umfaßt.

12. Ein Verfahren nach Anspruch 11, wobei ein Teil des einzigen Betätigers (25) den Zwischenkörper (5) darstellt.

13. Ein Verfahren nach irgendeinem der Ansprüche 1 bis 12, wobei das die Schwingung messende Mittel einen oder mehrere Beschleunigungsmesser umfaßt.

14. Ein Verfahren nach irgendeinem der Ansprüche 1 bis 13, wobei das die Kraft erzeugende Mittel (25) ein oder mehrere Trägheits-Rütteleinrichtungen umfaßt.

15. Ein Verfahren nach irgendeinem der Ansprüche 1 bis 14, wobei das aktive steuermittel (25) schwingungen steuert und das passive Steuermittel auf höheren Schwingungsfrequenzen arbeitet.

16. Eine Befestigung zum Ausführen des Verfahrens nach den Ansprüchen 1 bis 15, bei dem der schwingende Körper (1 oder 3) auf einem Stützkörper (3 oder 1) über eine Befestigung befestigt ist, die zwischen dem Schwingungskörper und dem Stützkörper einen Zwischenkörper enthält, wobei der Zwischenkörper schwingungsmäßig mit sowohl dem Schwingungskörper wie auch dem Befestigungskörper schwach gekoppelt ist, dadurch gekennzeichnet, daß ein Mittel (25) vorgesehen ist zum Anlegen von Kompensationskräften an den Schwingungskörper nach Maßgabe von erfaßten Schwingungen des Zwischenkörpers, um damit die Schwingungen des Zwischenkörpers über mindestens einem Teil des Frequenzbereiches, für den eine Steuerung der Schwingungen verlangt wird, zu steuern oder auf ein Minimum herabzusetzen.

**Revendications**

1. Méthode de commande active des vibrations dans laquelle, de façon à commander les vibrations sur au moins une partie du domaine de fréquence pour laquelle la commade est requise, des forces de commande sont appliquées à un corps intermédiaire (5) qui est couplé de façon faiblement vibrationnelle à la fois à un corps vibrant (1 ou 3) et un corps support (3 ou 1), caractérisée en ce que les forces de commande sont apliquées au corps intermédiaire (5) en relation avec les vibrations détectées sur le corps intermédiaire (5).

2. Une méthode selon la revendication 1, dans laquelle le corps vibrant (1 ou 3) est monté sur un corps support (3 ou 1) à un nombre de points de montage et chacun agit selon la revendication 1.

3. Une méthode selon la revendication 2, dans laquelle un moyen de vibration actif séparé (25) est prévu pour chaque montage pour commander les vibrations.

4. Une méthode selon la revendication 3, dans aquelle chaque montage a des moyens (25) produisant une force M et les signaux de commande sont calculés indépendamment pour le groupe séparé de moyens produisant la force M à chaque montage.

5. Une méthode selon une des revendications 1 à 4, dans laquelle le montage du corps intermédiaire comprend un amortisseur (19, 21) de façon à réduire les oscillations à l'intérieur du mongage qui pourraient, autrement, être entretenues par l'élasticité du découplage (7, 9) entre le corps intermédiaire (5) et le corps vibrant et le corps support (1 et 3).

6. Une méthode selon l'une des revendications 1 à 5, ayant plus d'un élément élastique (7, 9) reliant le corps intermédiaire (5) au corps vibrant et de maintien (1 et 3).

7. Une méthode selon la revendication 6, dans laquelle le corps intermédiaire (5) est rigide.

8. Une méthode selon la revendication 7, dans laquelle le corps intermédiaire (5) possède n degrés de liberté et jusqu'à n forces sont fournies au corps pour commander complètement les vibrations.

9. Une méthode selon la revendication 8, dans laquelle le montage est tel que toutes les forces appliquées au corps intermédiaire (5) par le corps vibrant (1 ou 3) sont réduites mécaniquement à trois forces appliquées selon trois directions orthogonales et en ce que les moyens (25) produisant les trois forces sont prévus pour produire une force de commande générale.

10. Une méthode selon l'une des revendications 1 à 9, dans laquelle les forces du corps vibrant (1 ou 3) agissant sur le corps intermédiaire (5) sont substantiellement confinées dans un seul plan et des actionneurs consistant en des moyens produisant deux forces (25) génèrent des forces dans les deux directions orthogonales à l'intérieur du plan et un mouvement rotationnel par rapport à un axe normal au plan.

11. Une méthode selon l'une des revendications 1 à 10, dans laquelle le support est relativement rigide dans une direction et procure ainsi une force de support substantielle dans cette direction tandis que les composants du montage passif ont une rigidité moindre dans les autres directions perpendiculaires ou au moins une rigidité réduite des moyens de découplage sur le côté du corps vibrant du corps intermédiaire et dans laquelle les moyens commandant la vibration comprennent seulement un actionneur (25).

12. Une méthode selon la revendication 11, dans laquelle une partie de l'actionneur simple (25) constitue le corps intermédiaire (5).

13. Une méthode selon l'une des revendications 1 à 12, dans laquelle les moyens de mesure de la vibration comprennent un ou plusieurs accéléromètres.

14. Une méthode selon l'une des revendications 1 à 13, caractérisée en ce que les moyens (25) produisant la force comprennent un ou plusieurs vibreurs inertiels.

15. Une méthode selon l'une des revendications 1 à 14, dans laquelle les moyens (25) de commande active agissent pour commander les vibrations et les moyens de commande passifs agissent pour les vibrations de fréquence plus élevée.

16. Un support pour la mise en oeuvre de la méthode selon une des revendications 1 à 15, dans lequel le corps (1 ou 3) assujetti à des vibrations est monté sur un corps support (3 ou 1) par un montage qui comprend un corps intermédiaire entre le corps vibrant et le corps support dans lequel le corps intermédiaire est couplé de façon faiblement vibrationnelle à la fois au corps assujetti et au corps support, caractérisé en ce que les moyens (25) sont prévus pour appliquer des forces de compensation au corps intermédiaire en réponse aux vibrations détectées dudit corps intermédiaire, de façon à commander ou minimiser les vibrations du corps intermédiaire au moins sur une partie du domaine de fréquence pour lequel la commande de vibration est requise.

EP 0 298 095 B1

Fig.1

Fig.2